# EUROPÄISCHE PATENTSCHRIFT

(11) **EP 1 263 553 B1**
(45) Veröffentlichungstag und Bekanntmachung des Hinweises auf die Patenterteilung: **27.09.2006**
(21) Anmeldenummer: 01931359.2
(22) Anmeldetag: 09.03.2001
(51) Int. Cl.: B25G 1/10, A01B 1/02

(54) **STIEL FÜR EIN ARBEITSGERÄT UND DAMIT AUSGESTATTETE ARBEITSVORRICHTUNG**
HANDLE FOR A TOOL AND A TOOL PROVIDED THEREWITH
MANCHE POUR OUTIL DE TRAVAIL, ET DISPOSITIF DE TRAVAIL POURVU D'UN TEL MANCHE

(30) Priorität: 09.03.2000 DE 10011106
(43) Veröffentlichungstag der Anmeldung: 11.12.2002
(73) Patentinhaber: Dickhaus und Partner GmbH, D-82362 Weilheim (DE)
(72) Erfinder: DICKHAUS, Reiner, 82418 Murnau (DE)
(74) Vertreter: Alber, Norbert
(86) Internationale Anmeldenummer: PCT/DE2001/000912
(87) Internationale Veröffentlichungsnummer: WO 2001/066315

(56) Entgegenhaltungen:
- DE-A- 4 415 974
- FR-A- 2 057 100
- US-A- 3 436 111
- US-A- 5 156 429
- US-A- 5 188 340

## Beschreibung

Die Erfindung betrifft einen Stiel für ein Arbeitsgerät entsprechend dem Oberbegriff des Anspruchs 1.

Ein derartiges Gerät geht beispielsweise aus US 5 188 340 hervor. Ein gattungsgemäßer Stiel und ein damit versehenes Arbeitsgerät sind bspw. aus der DE 4415974 A 1 bekannt. Die bekannte Vorrichtung ist dahingehend nachteilig, dass die Bewegungen bei der Schaufelarbeit eingeschränkt sind. Mit einem hohen, vom geknickten Griff ist es schwierig, eine Ladung nach dem Aufnehmen und Anheben, wie es mit bekannten Stielgeräten üblich und möglich ist, seitlich mit einer Drehung der Stielgriffs abzukippen. Je höher der vordere Griffbereich ist, umso schwieriger wird eine solche Drehung. Nur im Schwebepunkt der Wurfbewegung ist eine Drehung mit hohem vorderem Griffbereich möglich. Erforderlich ist eine mit Schwung auszuführende Manipulation, die mehr Arbeitsraum benötigt.

Die bekannte Vorrichtung mit hohem geknicktem Stielgriff ist weiterhin bei einer Schaufelarbeit über Kniehöhe nachteilig. Der Griff muss dann in Schulterhöhe angehoben werden, um das Schaufelblatt ins Ladegut hineinstoßen zu können. In dieser ungünstigen Körperhaltung muss dann die Ladung angehoben und beschleunigt werden, um sie fortzuschleudern.

Bei Schaufelarbeiten ab Hüfthöhe wird es jedoch auch schwierig, mit herkömmlichen langstieligen Schaufeln zu arbeiten, da der lange Schaufelstiel nur noch vorne gehandhabt werden kann. Deshalb wird dann oft eine Schaufel mit kürzerem Stielgriff oder ein Spaten benutzt.

Muss in kniender Haltung gearbeitet werden, wird üblicherweise ein Handgerät wie Handschaufel, Maurerkelle usw. verwendet. Wegen der geringen Handkraft fehlt dann jedoch die Kraft, welche die Arbeitshebel der großen Stielgriffe bieten. Auch ist die Reichweite mit kleinen Handgeräten eingeschränkt, ebenso der Einsatz von Fuß- und Schulterkräften,

Darüber hinaus ist aus US 5188340 ein spatenartiges Arbeitsgerät mit einem Griff, der außer einem gekröpften Ende ebenfalls nahe des Spatenblattes mehrfach gekröpfte Abschnitte aufweist, die jedoch zum Aufsetzen und Aufpressen des Fußes dienen und dementsprechend positioniert und dimensioniert sind.

Weiterhin zeigt die US 5156429 einen Handgriff, der an einem Arbeitsgerät befestigt werden kann, jedoch insgesamt nur die Länge eines Unterarmes besitzt, also zum Arbeiten im Stehen auf dem Untergrund nicht geeignet ist.

Die Erfindung hat sich zur Aufgabe gestellt, einen in ergonomischer Hinsicht verbesserten Stiel für ein Arbeitsgerät zu schaffen.

Diese Aufgabe wird erfindungsgemäß durch einen Stiel nach Anspruch 1 gelöst. Vorteilhafte Weiterbildungen der Erfindung sind in den Unteransprüchen aufgezeigt.

Der Erfindung liegt die Erkenntnis zugrunde, daß nur mit einer mindestens zwei- oder mehrstufigen Greifinöglichkeit vorne am Stiel die eigentlich einander entgegenstehenden ergonomischen Anforderungen mit einem Gerät zu bewältigen sind.

Die Erfindung betrifft ferner eine Arbeitsvorrichtung mit einem Arbeitsgerät und einem erfindungsgemäßen Stiel.

Hierbei kann vorgesehen sein, daß der Stiel außermittig an einem Arbeitsgerät befestigt ist.

Die erfindungsgemäßen Vorrichtungen gleichen teilweise in der Handhabung und Arbeitsweise bekannten Handarbeitsgeräten wie z.B. Schaufel, Spaten, Gabel, Hacke usw.. Die Arbeiten der bekannten Handarbeitsgeräte sind jedoch mit den erfindungsgemäßen Vorrichtungen leichter bzw. mit weniger Kraftaufwand zu bewältigen, denn die Körperkräfte der Hände, Füße, Oberschenkel, Schultern usw. auf das Werkzeug können an den dafür ausgestalteten Ansatzpunkten ergonomisch günstiger eingeleitet werden.

Außer dem sowohl kräfte- als auch rückenschonenden Arbeiten mit den neuartigen Geräten verringert sich die Gefahr der Blasenbildung an den Händen durch die quer zu den geschlossenen Händen verlaufenden Arbeitskräfte, welche außerdem noch quer in die Hand übertragen werden.

Verletzungen durch Eindringen des Stielendes in den Körper wie bei herkömmlichen stielgeführten Geräten werden durch die Gestaltung der hinteren Griffbereiche vermieden. Die Elastizität des Materials in Verbindung mit der S-förmigen Gestaltung der vorderen gebogenen Griffbereiche der erfindungsgemäßen Vorrichtungen ermöglichen, daß Stöße und Schläge abgefedert werden; in Verbindung mit der großflächigen Gestaltung der Abstützbereiche der erfindungsgemäßen Vorrichtungen verhindert sie Prellungen der kontaktierten Körperbereiche.

Die Arbeitsfunktionen ähneln den bisherig bekannten Geräten, allerdings hat die jeweilige erfindungsgemäße Vorrichtung mehr Arbeitseinsatzmöglichkeiten; diese Multifunktionalität wird durch die S-förmige Grundform ermöglicht. Die erfindungsgemäße Vorrichtung, mit stabilem "Schaufelblatt" ausgerüstet, kann deshalb die Arbeiten der bisherigen langstieligen Schaufel, des bisherigen Spatens, des Eiskratzers bzw. Schäpers und der Hacke ergonomisch günstig ausführen; zusätzlich kann sie noch als Handschaufel mit einer Hand bzw. einem Arm geführt werden.

Bisher von Hand geführte maschinenangetriebene Arbeitsgeräte wie z.B. Heckenscheren können ergonomisch günstiger und somit mit weniger Körperkraft betrieben werden. Die Multifunktionalität ermöglicht auch den Einsatz der Heckenschere, um am Boden z.B. ohne Bücken vertrocknete Stauden abzuschneiden und höhere Hecken ohne Leiter zu schneiden.

Vorteilhaft ist es, daß der benötigte Arbeitsraum für die erfindungsgemäße Vorrichtung nur den Arbeitsraum einer kurzen Schaufel bzw. eines Spatens benötigt, aber bei gleichem Ladegewicht gegenüber einer herkömmlichen langstieligen Schaufel teilweise größere Reichweiten erreicht; dies bei geringer Belastung der Wirbelsäule. Auf alle Fälle ist die Eindringkraft ins Ladegut teilweise um ein Vielfaches größer bei geringerer Körperanstrengung als bei herkömmlichen Geräten.

Im Gegensatz zu den bekannten Ausführungsformen ist die erfindungsgemäße Griffanordnung mit übereinander angeordneten Griffhöhen im vorderen Griffbereich mit einem geraden, schräg nach oben verlaufenden langen Griffteil angeordnet. Diese auf die Körpermaße bezogenen Griffbereiche ermöglichen zu den Arbeitsmöglichkeiten im Stehen, bei denen mit dem erfindungsgemäßen Gerät das Ladegut in unterschiedliche Richtungen und Höhen gehandhabt werden kann, zusätzlich eine große Multifunktionalität.

Ausführlich wurden die bisher einander entgegenstehenden ergonomischen Anforderungen beim Arbeiten der Bedienperson im Stehen beschrieben, wenn der Arbeitsbereich, z.B. das Ladegut, in unterschiedlichen Höhen lag. Insgesamt ähnlich gegensätzlich sind die ergonomischen Anforderungen bei Arbeiten, die von der Bedienperson im Stehen, Knien und sogar im Sitzen durchgeführt werden. Die erfindungsgemäße Griffhebelanordnung bezogen auf die Körpermaße ist so ausgewogen, daß auch diese Arbeiten mit nur einer Geräteausführung möglich ist.

Die Erfindung wird nachfolgend anhand mehrerer Ausführungsbeispiele im einzelnen beschrieben, wobei auf eine Zeichnung Bezug genommen ist. Es zeigt:

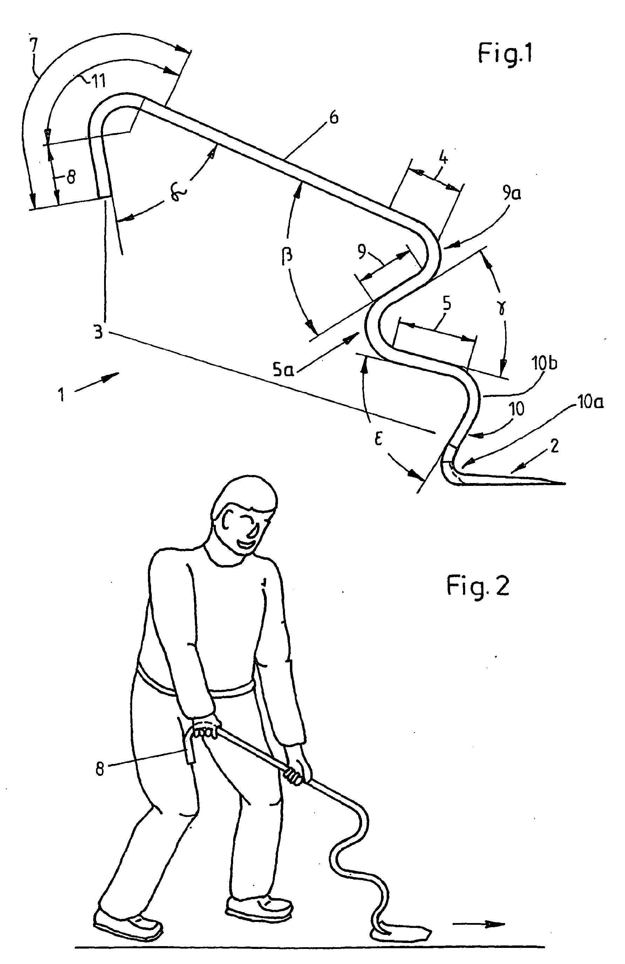

Fig. 1 eine Darstellung gemäß einem ersten Ausführungsbeispiel der erfindungsgemäßen Vorrichtung, ausgerüstet mit einem Spatenblatt in vertikaler Arbeitsposition, in seitlicher Ansicht.
Fig. 2 eine perspektivische Darstellung der Handhabung gemäß dem ersten Ausführungsbeispiel in vertikaler Arbeitsstellung, in der eine Bedienperson mit dem Oberschenkel die Vorrichtung am Griffbereich (8) in die Ladung drückt.

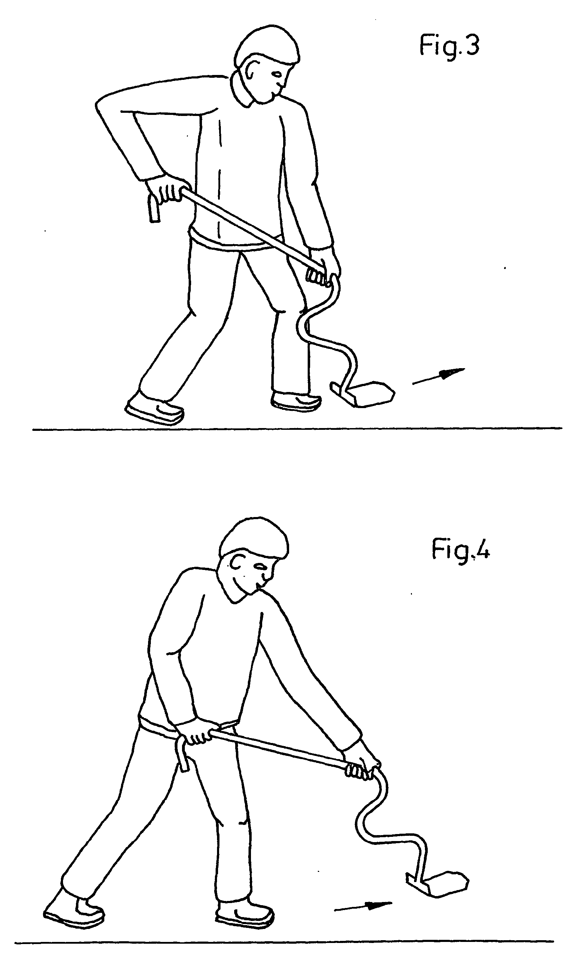

Fig. 3 eine perspektivische Darstellung der Handhabung gemäß dem ersten Ausführungsbeispiel der erfindungsgemäßen Vorrichtung in einer Arbeitsstellung, die die Ausgangsstellung darstellt, in der eine Bedienperson die Vorrichtung an den Griffbereichen (4, 11) mit der in Bodenhöhe aufgenommenen Ladung nach vorne stößt.
Fig. 4 eine perspektivische Darstellung der Handhabung gemäß dem ersten Ausführungsbeispiel der erfindungsgemäßen Vorrichtung in einer Arbeitsstellung, in der die beschleunigte Ladung nach vorne herunterfällt.

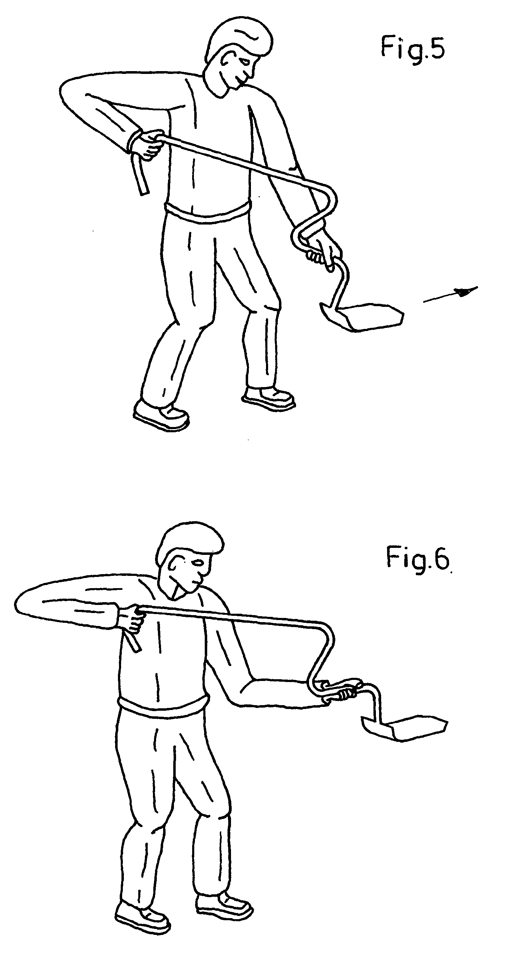

Fig. 5 eine perspektivische Darstellung der Handhabung gemäß dem ersten Ausführungsbeispiel der erfindungsgemäßen Vorrichtung in einer Arbeitsstellung beim Schaufeln, die die Ausgangsstellung darstellt, in der eine Bedienperson mit der Vorrichtung in das Ladegut, das sich über Kniehöhe befindet, hineinstößt oder die aufgenommene Ladung nach vorne stößt.
Fig. 6 eine perspektivische Darstellung der Handhabung gemäß dem ersten Ausführungsbeispiel der erfindungsgemäßen Vorrichtung, in einer Arbeitsstellung, bei der sich die Bedienperson mit der Vorrichtung in der Ausgangsstellung befindet, in der die Vorrichtung in die Ladung hineingestoßen wird. Die Ladung liegt in Hüfthöhe.

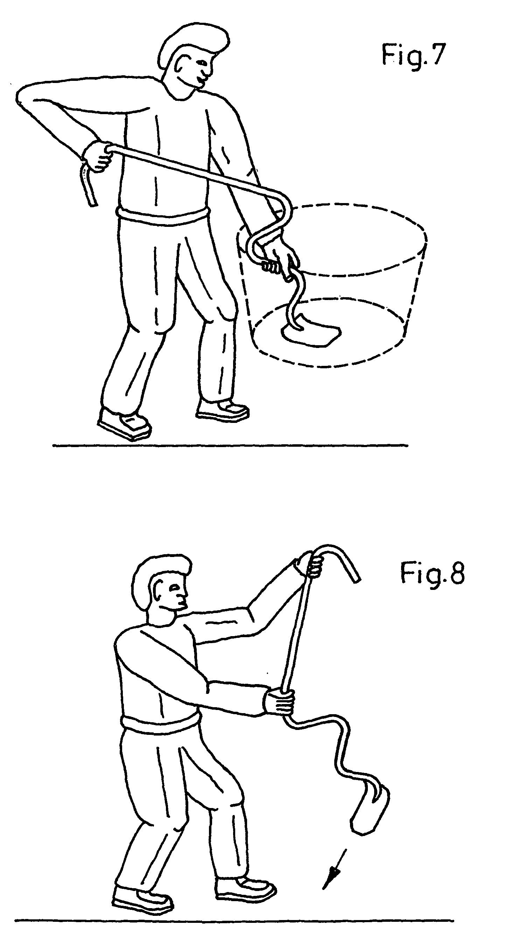

Fig. 7 eine perspektivische Darstellung der Handhabung gemäß dem ersten Ausführungsbeispiel der erfindungsgemäßen Vorrichtung, in einer Arbeitsstellung, bei der die Bedienperson mit der Vorrichtung die Ladung aus einem Behälter entnimmt. Die Ladung liegt über Kniehöhe.

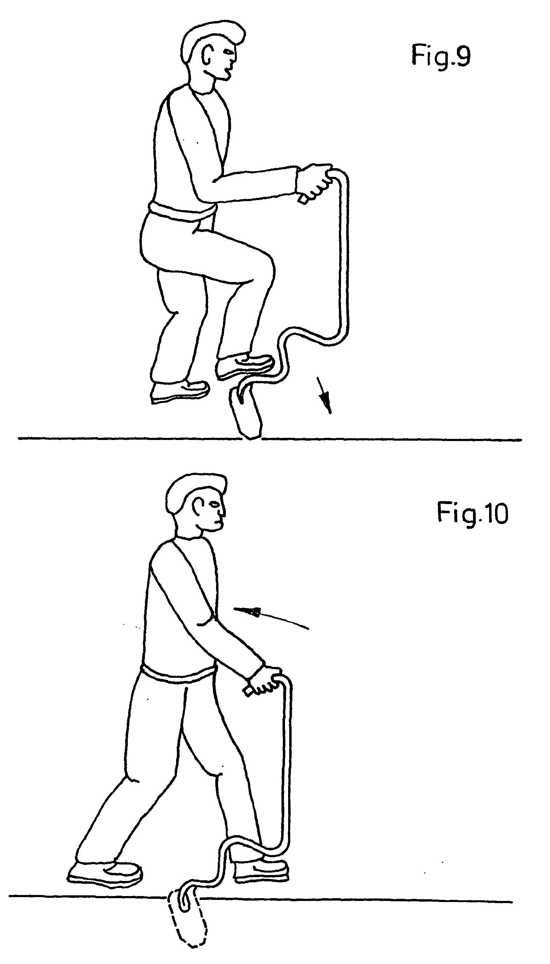

Fig. 8 eine perspektivische Darstellung der Handhabung gemäß dem ersten Ausführungsbeispiel der erfindungsgemäßen Vorrichtung, in einer Arbeitsstellung bei Spatenarbeiten. Der Spaten wird in senkrechter Arbeitsposition wie eine Hacke in den Boden geschlagen.
Fig. 9 eine perspektivische Darstellung der Handhabung gemäß dem ersten Ausführungsbeispiel in einer Arbeitsstellung, in der ein Werkzeugteil der erfindungsgemäßen Vorrichtung durch eine Bedienperson in den Boden gestoßen wird.
Fig. 10 eine perspektivische Darstellung der Handhabung gemäß dem ersten Ausführungsbeispiel in einer Arbeitsstellung, in der ein Werkzeugteil der erfindungsgemäßen Vorrichtung, nachdem es in den Boden gestoßen wurde, von einer Bedienperson nach hinten umgehebelt wird.

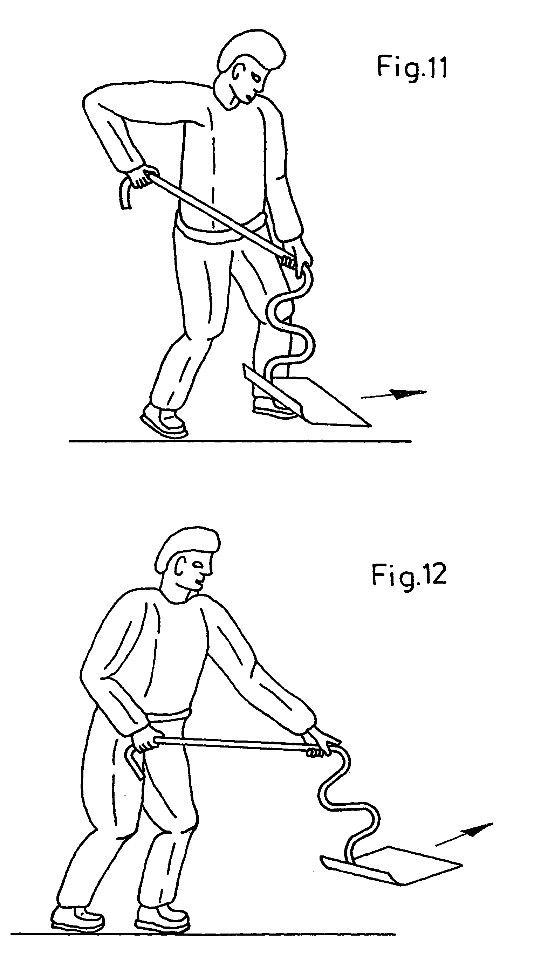

Fig. 11 eine perspektivische Darstellung der Handhabung gemäß einem zweiten Ausführungsbeispiel der erfindungsgemäßen Vorrichtung, mit einem großen Schaufelblatt ausgerüstet, in der Arbeitsstellung, in der eine Bedienperson die Vorrichtung an den Griffbereichen (4, 11) mit der in Bodenhöhe aufgenommenen Ladung nach vorne stößt.
Fig. 12 eine perspektivische Darstellung der Handhabung gemäß einem zweiten Ausführungsbeispiel der erfmdungsgemäßen Vorrichtung, mit einem großen Schaufelblatt ausgerüstet, in der Arbeitsstellung, in der eine Bedienperson die Vorrichtung an den Griffbereichen (4, 11) mit der aufgenommenen Ladung nach vorne gestoßen hat, und die beschleunigte Ladung nach vorne vom Werkzeugteil herunterfällt.

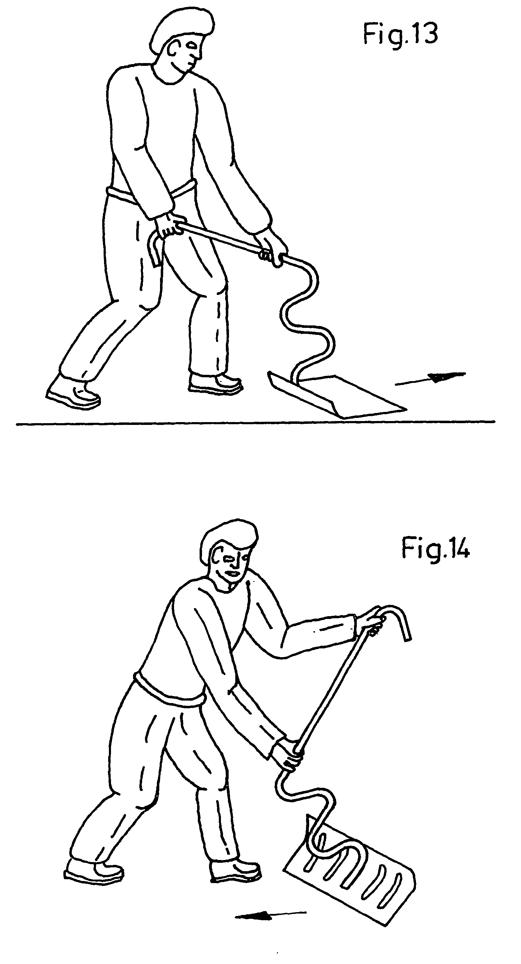

Fig. 13 eine perspektivische Darstellung der Handhabung gemäß einem zweiten Ausführungsbeispiel in vertikaler Arbeitsstellung, in der eine Bedienperson mit dem Oberschenkel die Vorrichtung am Griffbereich (8) in die Ladung drückt.
Fig. 14 eine perspektivische Darstellung der Handhabung gemäß einem zweiten Ausführungsbeispiel der erfindungsgemäßen Vorrichtung mit einem Schneeschieber/Schaufelblatt als Werkzeugteil (2), in einer senkrechten Arbeitsstellung beim Heranziehen der Ladung.

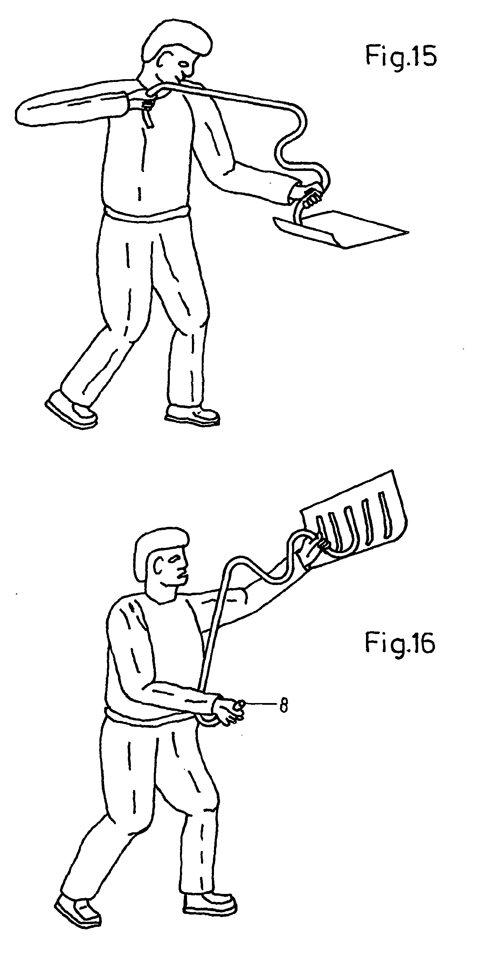

Fig. 15 eine perspektivische Darstellung der Handhabung gemäß einem zweiten Ausführungsbeispiel der erfindungsgemäßen Vorrichtung mit einem Schneeschieber/Schaufelblatt als Werkzeugteil (2), in einer Arbeitsstellung, bei der die Bedienperson die über Hüfthöhe aufgenommene Ladung beschleunigt.
Fig. 16 eine perspektivische Darstellung der Handhabung gemäß einem zweiten Ausführungsbeispiel der erfindungsgemäßen Vorrichtung mit einem Schneeschieber/Schaufelblatt als Werkzeugteil (2), in einer Arbeitsstellung, bei der die Bedienperson die mit der Vorrichtung beschleunigte Ladung am hinteren Griffende (8) der Vorrichtung verdreht und so abkippt.

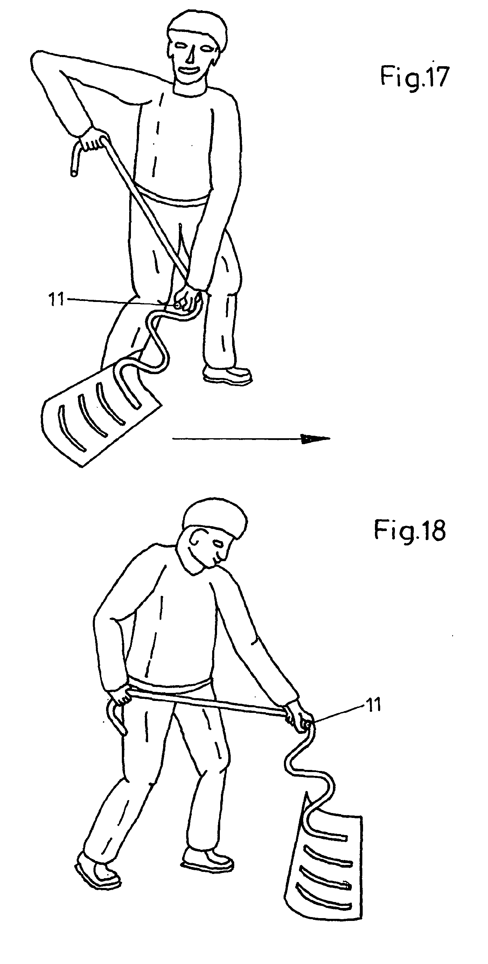

Fig. 17 eine perspektivische Darstellung der Handhabung gemäß einem dritten Ausführungsbeispiel der erfindungsgemäßen Vorrichtung mit einem asymmetrisch am Griff (3) angebrachten Schaufelblatt als Werkzeugteil (2), in einer senkrechten Arbeitsstellung beim Heranziehen der Vorrichtung zum Heranziehen der Ladung. Die Bedienperson in aufrecht stehender Körperhaltung bewegt am vorderen Zusatzgriff (11) vor dem Körper die Vorrichtung in eine Schaufelfunktion übergehend zur Seite.
Fig. 18 eine perspektivische Darstellung der Handhabung gemäß einem dritten Ausführungsbeispiel der erfindungsgemäßen Vorrichtung mit einem asymmetrisch am Griff (3) angebrachten Schaufelblatt als Werkzeugteil (2), in einer senkrechten Arbeitsstellung beim Beschleunigen der Vorrichtung in Schaufelfunktion zum Fortschleudern der Ladung zur Seite.

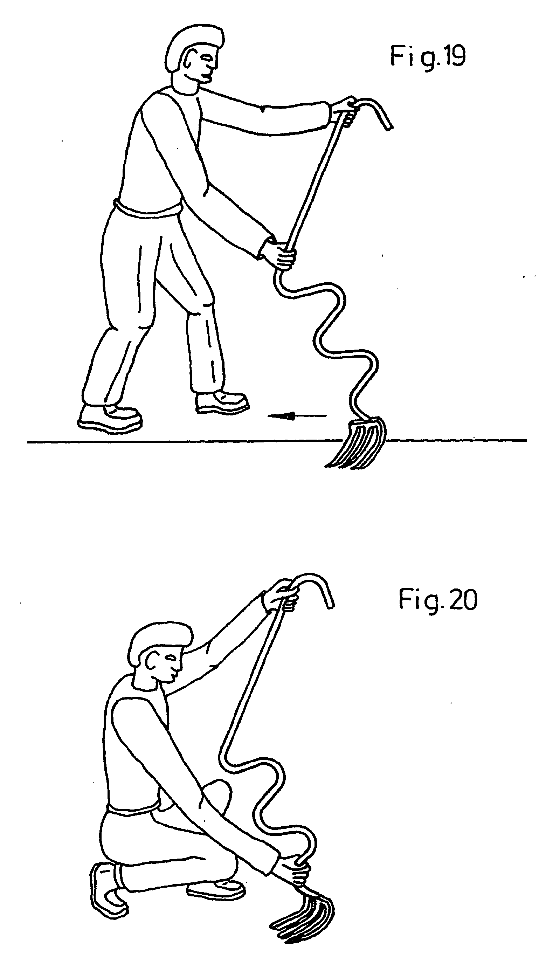

Fig. 19 eine perspektivische Darstellung der Handhabung gemäß einem vierten Ausführungsbeispiel der erfindungsgemäßen Vorrichtung mit einem Gabelblatt als Werkzeugteil (2), mit der Bedienperson in aufrecht stehender Körperhaltung, welche die Vorrichtung in senkrechter Stellung heranzieht zum Harken des Bodens.
Fig. 20 eine perspektivische Darstellung der Handhabung gemäß einem vierten Ausführungsbeispiel der erfindungsgemäßen Vorrichtung mit einem Gabelblatt als Werkzeugteil (2), in einer senkrechten Arbeitsstellung der Vorrichtung beim Heranziehen zum Harken des Bodens; die Bedienperson in kniender Körperhaltung.

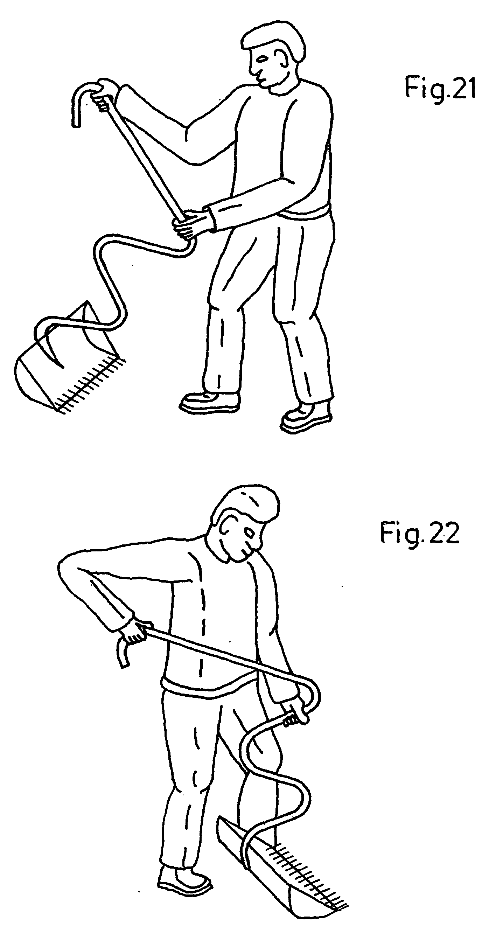

Fig. 21 eine perspektivische Darstellung der Handhabung gemäß einem fünften Ausführungsbeispiel der erfindungsgemäßen Vorrichtung mit einem Harken-/Schaufelblatt als Werkzeugteil (2), in einer senkrechten Arbeitsstellung beim Heranziehen der Vorrichtung zum Zusammenziehen z.B. von Laub, die Bedienperson in aufrechtstehender Körperhaltung.
Fig. 22 eine perspektivische Darstellung der Handhabung gemäß einem fünften Ausführungsbeispiel der erfindungsgemäßen Vorrichtung mit einem Harken-/Schaufelblatt als Werkzeugteil (2), in einer vertikalen Arbeitsposition zum Aufnehmen des gesamten Ladegutes, z.B. de Laubes, wie mit einer Schaufel.

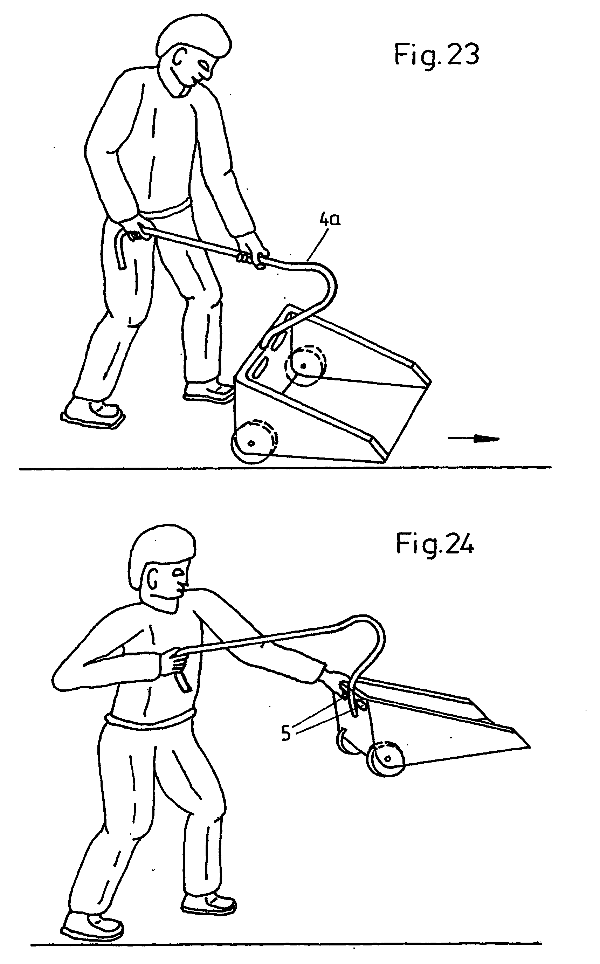

Fig. 23 eine perspektivische Darstellung der Handhabung gemäß einem sechsten Ausführungsbeispiel der erfindungsgemäßen Vorrichtung mit einem Schaufel-/Ladebehälter mit Rollen (12) zum Schieben als Werkzeugteil (2), in einer vertikalen Arbeitsposition zum Aufnehmen des Ladegutes, z.B. Schnee, wie mit einer Schaufel; oder zum Transport der Ladung wie mit einer Karre.
Fig. 24 eine perspektivische Darstellung der Handhabung gemäß einem sechsten Ausführungsbeispiel der erfindungsgemäßen Vorrichtung mit einem Schaufel-/Ladebehälter mit Rollen zum Schieben als Werkzeugteil (2), in einer Arbeitsposition um das aufgenommene Ladegut, z.B. Schnee, wie mit einer Schaufel zu befördern. Die vordere Hand führt die Vorrichtung an dem unteren Griffbereich (5) des S-förmigen Griffs (3), der im Rand des Schaufelblatts/Ladebehälters integriert ist.

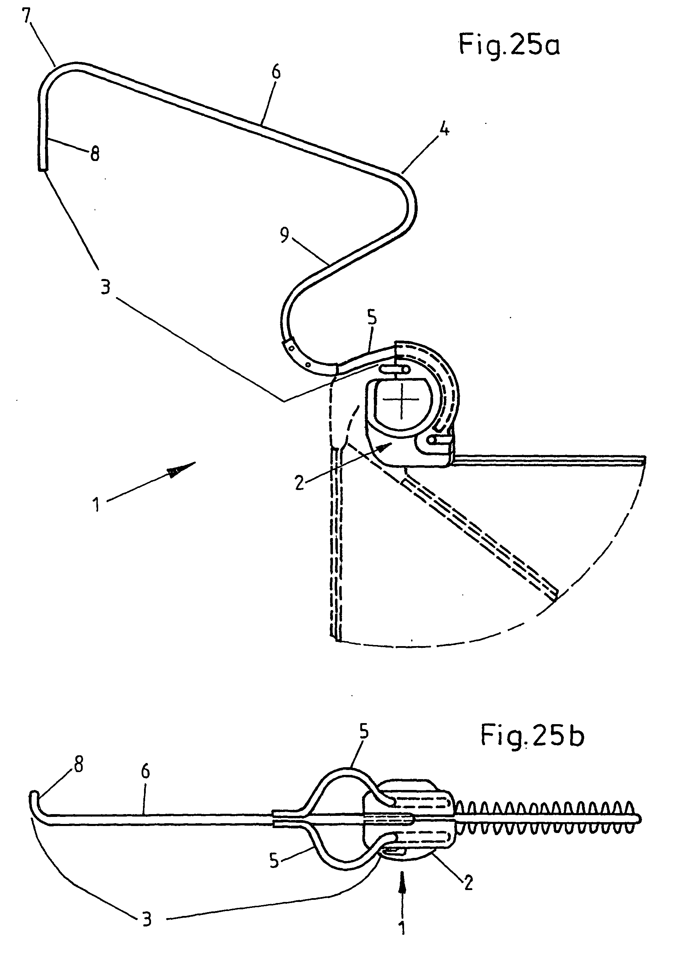

Fig. 25 a eine Darstellung gemäß einem siebten Ausführungsbeispiel der erfindungsgemäßen Vorrichtung, ausgerüstet mit einem maschinenangetriebenen Arbeitsgerät zum Hekkenschneiden in vertikaler Arbeitsposition, in seitlicher Ansicht.
Fig. 25 b eine Darstellung gemäß einem siebten Ausführungsbeispiel der erfindungsgemäßen Vorrichtung, ausgerüstet mit einem maschinenangetriebenen Arbeitsgerät zum Hekkenschneiden in der Draufsicht von oben.
Fig. 26 eine perspektivische Darstellung der Handhabung gemäß einem siebten Ausführungsbeispiel der erfindungsgemäßen Vorrichtung mit dem maschinenangetriebenen Arbeitsgerät zum Heckenschneiden als Werkzeugteil (2), welches zum Heckenschneiden oben um 90° gegenüber der Fig. 25 a verstellt ist.
Fig. 27 eine perspektivische Darstellung der Handhabung gemäß einem siebten Ausführungsbeispiel der erfindungsgemäßen Vorrichtung mit nach oben gedrehtem maschinenangetriebenen Werkzeug beim Heckenschneiden.
Fig. 28 eine perspektivische Darstellung der Handhabung gemäß einem achten Ausführungsbeispiel der erfindungsgemäßen Vorrichtung mit maschinenangetriebenem Arbeitsgerät, und zwar einem Preßlufthammer als Werkzeugteil (2), beim Entfernen von Wandputz.
Fig. 29 eine Ausführungsform mit einem gegenüber dem geraden Mittelabschnitt abgewinkelten Zwischenabschnitt.
Fig. 30 eine Ausführungsform die nicht der Erfindung entspricht.

Fig. 1 zeigt in einer seitlichen Draufsicht einen erfmdungsgemäßen Stiel, ausgerüstet mit einem Spatenblatt 2. Aus der Darstellung ergeben sich der Mittelabschnitt 6, die bogenförmigen Bereiche 11, 9a, 5a, 10b, die geraden Griffbereiche 8, 9, 5 und der Trittabschnitt 10. Die Griffabschnitte 8, 9, 5 und 10 können in einer Ebene liegen, wie in Fig. 1 dargestellt, können aber auch unter einem Winkel zur Darstellungsebene liegen, wobei dann die in Fig. 1 angegebenen Winkelmaße der Projektion auf die Darstellungsebene entsprechen.

Die erfindungsgemäße Vorrichtung, nach Fig. 2 in waagerechter Lage zum Schaufeln eingesetzt, hat hinten eine abgerundete großflächige Gestaltung des Griffendes. Der nach unten gerichtete Bogen ist bekannt, nicht aber der etwas schräg nach vorne, mehr als um eine Handbreite verlängerte gerade Griffteil. Dieser Griffbereich 8 ermöglicht es, beim Vorschieben bzw. Stoßen mit dem Oberschenkel den Ansatzpunkt der Krafteinleitung möglichst tief einzuleiten, um in einem günstigen flachen Winkel in das Ladegut einzudringen. Durch die großflächige Auflage bzw. Abstützung des Stielendes und der beschriebenen Stoßdämpfung des Stielgriffs werden Verletzungen am Körper vermieden. Durch Hin- und Herbewegungen der vorderen Hand läßt sich das Eindringen und Lockern noch weiter unterstützen.

Zum Aufnehmen des Ladeguts kann der lange gerade Griffteil 6 vorne durch die Hand gleiten, während der hintere vorher angewinkelte Ellbogen durch Streckung des Arms am hinteren Griffteil die Vorrichtung nach vorne ins Ladegut stößt. Beim Nachvornstoßen der Vorrichtung ins Ladegut kann auch der vordere Arm die Bewegung synchron ausführen. Das aufgenommene Ladegut wird zum Beschleunigen der Schaufelladung in die Ausgangsstellung nah am Körper nach hinten gezogen. Bei der Bewegung in diese Ausgangsstellung geschieht das Anheben der Vorrichtung mit fast aufrechtem Oberkörper. In dieser Ausgangsstellung mit fast aufrechtem Oberkörper ist der vordere Arm ist nach unten gestreckt und trägt das gesamte Gewicht des Geräts mit seiner Ladung. Der hintere angewinkelte Ellbogen braucht in dieser Ausgangsstellung kein Gewicht auszugleichen. Die Beschleunigungskraft durch die Streckung des vorher angewinkelten Arms liegt fast auf einer Linie mit der zu beschleunigenden Ladung zum hinteren Ende des Griffteils, wegen des langen geraden schräg nach oben verlaufenden Stielbereiches. Beim Nachvornestoßen der Vorrichtung kann der lange gerade Griffteil 6 durch die Hand nach vorne gleiten und so der Griff geführt werden; oder der vordere Arm führt die Bewegung synchron, das Schultergelenk bildet dabei die Drehachse bei dieser Bewegung. Diese Handhabung wird durch die ausgewogene Anordnung der vorderen Griffbereiche 4,5,9 des Stielteils und den armlangen Griffbereich 6 möglich.

Bei herkömmlichen Stielgriffen muss hinten mit angewinkeltem oder verdrehtem Handgelenk über Reibungskräfte, welche durch die geringe Handkraft begrenzt sind, das Gerät beschleunigt werden. Zusätzlich muss der hintere Arm noch die Schaufellast am Stielende als Gegenhebel führen. Die weit vom Körper mit beiden Armen weg zu bewältigenden Lasten bzw. Kräfte fordern beim Bewegungsablauf den Rücken-, Arm- und Handapparat sehr. Dies ist bei den erfindungsgemäßen Vorrichtungen nicht der Fall. Die Handhabung mit den erfindungsgemäßen Vorrichtungen ist weniger anstrengend; bei gleichem Gewicht des Ladeguts sind geringere Körperkräfte erforderlich. Die Wirbelsäule mit dem Bänder- und Muskelapparat wird auch weniger belastet, weil die Arbeitsbewegung mehr mit den leistungsfähigen Muskeln der Arme und den Beinen ausgeführt wird; wie z.B. beim Eindringen in die Ladung fast nur mit der Kraft des Oberschenkels (Fig. 2).

Die bisherigen Handarbeitsgeräte sind vom Kraftaufwand, den sie benötigen, für Frauen und den immer älter werdenden Bevölkerungsanteil nicht geeignet. Aber auch für die jüngere Generation, die zunehmend unter Rückenproblemen und Schäden an der Wirbelsäule leidet, ist sowohl Kräfte- als auch rückenschonendes Arbeitsgerät besser. Vorteilhaft ist, dass dieses rückenschonende Arbeiten nicht nur (wie bei herkömmlichen Geräten mit entsprechender Schulung im gewissen Umfang auch) möglich ist, sondern durch die Griffmöglichkeiten sogar mehr vorgegeben ist (die Anleitung sozusagen integriert ist).

Außerdem werden die Hände weniger belastet, da nicht mehr, wie bei bisherigen Handarbeitsgeräten üblich, die Reibungskraft der Hände die Körperkräfte übertragen muss.

Vorteilhaft ist, dass zur Führung der erfindungsgemäßen Vorrichtung trotz der ungewohnten Griffgestaltung der Bewegungsablauf den gewohnten Bewegungen eines ungeschulten Benutzers ähnelt, wenn das Gerät den bekannten Arbeitseinsätzen wie z.B. Schaufeln entspricht.

So bietet sich der Ansatz 10 am Stielgriff zum Werkzeugblatt 2 beim Arbeitseinsatz des Geräts als Spaten an, mit dem Fuß von hinten auf dem Ansatz 10 wie auf eine Treppenstufe mit dem vollem Körpergewicht zu treten. Beim Arbeitseinsatz des Geräts als Spaten ist der Stielgriff in fast senkrechter Lage. Der Ansatz 10 ist, von der Seite gesehen, Teil des untersten Griffbereichs; also des vorderen gebogene S-förmigen Griffbereichs, der schräg nach vorne über dem Werkzeugblatt in diesen übergeht. Die Belastung in der Mitte vermeidet ein Verdrehen bzw. seitliches Ausweichen des Werkzeuges. Der Ansatz 10 am Führungsstiel 3 kann gleich gut von der Seite oder von hinten mit dem Fuß belastet werden.

Die Anordnung des hinteren Griffbereichs 7 (Fig. 1) in Höhe der normalen Spatengriffenden hat den geraden, mehr als handbreiten Teil des Griffendes so angeordnet, dass beim Darauftreten auf den Ansatz mit dem Fuß von hinten das Griffende schräg nach unten wie der Handlauf einer Treppenstufe verläuft, fast rechtwinklig zum Unterarm (Fig. 9, 10).

Diese Griffanordnung an zwei erfindungsgemäßen Vorrichtungen mit Gabelblatt ausgerüstet, ist so ausgewogen, dass es möglich ist, mit zwei Geräten wie mit Stelzen eine schräge Fläche hinaufzusteigen.

Die Anordnung des hinteren Griffendes mit der großflächigen Gestaltung erleichtert das senkrechte Hineinstoáen als Spaten mit Schwung hinter oder neben dem Gerät stehend (Fig. 8). Der Griff ist fast quer zur Stoßrichtung angeordnet, so dass beim Hineintreten des Werkzeugblattes auch bei glatter Oberfläche der Griff nicht aus der Hand gleitet (Fig. 9, 10). Die Anordnung des hinteren Griffendes bietet auch einen längeren Krafthebel für die Drehung des Geräts als oben beschriebene Geräte.

Vorteilhaft ist das Gerät auch zum Auseinanderhebeln von Brettern, z.B. einer Euro-Transport-Palette oder Deckenverkleidung, anstelle der Verwendung von "Kuhschwanz" oder Brechstange.

Weiter vorteilhaft ist der geringe Arbeitsraum bzw. Bewegungsraum, der notwendig ist, um die Kraft auf die Werkzeugschneide zu bringen. Beim Graben einer kleinen Grube mit senkrechten Wänden, im Durchmesser der Länge des Spatenblatts entsprechend, aber doppelt so tief wie der Durchmesser, ist das erfindungsgemäße Gerät optimal einsetzbar; dort muss sonst der zweiblätterige Scherenspaten eingesetzt werden. Durch den kombinierten Einsatz der Körperkräfte kann mit dem erfindungsgemäßen Gerät auch in steinigem festen Boden gegraben werden, wo sonst eine Brechstange die Schaufelarbeit unterstützen muss, da der "Scherenspaten" nicht mehr ausreicht. Beim Graben wird fast das ganze Körpergewicht mittig auf den Trittbereich wie auf eine Treppenstufe gesetzt. So wie ein Treppe barfuss bestiegen werden kann, ermöglicht die flächige Gestaltung der Trittfläche sogar eine barfüßige Benutzung des Grabegeräts. Unterstützt wird das Eindringen des Grabegeräts noch dadurch, dass der Griffhebel während der Belastung der Trittfläche hin und her gehebelt wird (Fig. 10), um den Untergrund zu lockern; dies kann auch noch durch Drehbewegungen der Vorrichtung unterstützt werden.

Nach dem Eindringen und Umhebeln des Stielgriffs kann mit dem dann fast waagrecht liegenden Werkzeugblatt das gelockerte Ladegut mit einer Paddelbewegung die Erde aus dem Loch gehoben werden, während die Bedienperson kniet oder sich an den Rand der Grube setzt. Auch dabei sind die vorderen Greifbereiche in der unterschiedlichen Höhenanordnung sehr vorteilhaft.

Vorteilhaft ist, daß bei diesen Arbeiten das "Grabegerät" als Stütze wie einen Spazierstock beim Hinknien und Aufstehen verwendet werden kann.

Vorteilhaft ist ebenfalls, dass bei den erfindungsgemäßen Vorrichtungen auch die Verletzungsgefahr vermieden wird, welche bei herkömmlichen Geräten beim Entnehmen z.B. von Mörtel mit einer Schaufel durch das Einklemmen der vorderen Hand am Rand einer Schubkarre usw. entsteht (Fig. 7). Auch bei den Grabearbeiten der vorher geschilderten kleinen Grube ist beim Hineinstoáen das Einklemmen der vorderen Hand durch Abgleiten und beim Umhebeln möglich. Durch die S-förmig gebogene vordere Griffausführung sind die Greifbereiche der Hände bei den erfindungsgemäßen Vorrichtungen aus dem Gefahrenbereich entfernt (Fig.7).

Die herkömmlichen Handarbeitsgeräte lösen die gegensätzlichen Anforderungen, die ein optimales Schneeschaufeln und Schneeschieben erfordern, nicht. Als Schneeschieber geeignet ist ein Gerät mit einem großen Werkzeugblatt, das fast quer mit seiner Fläche zum Schnee geschoben wird. Die fürs Schieben notwendige steile schräge Stellung der Fläche des Werkzeugblatts mit dem Stielgriff ist für die Schaufelarbeit nicht günstig. Soll mit diesem Gerät geschaufelt werden, muss die Werkzeugfläche im flachen Winkel unter den Schnee geschoben und dann angehoben werden. Ohne sich weit nach unten zu beugen ist die Arbeit nicht durchzuführen; dies gilt erst recht für das Anheben. Das große Gewicht von nassem Schnee erhöht die anstrengende ungünstige Körperbelastung. Eine asymmetrische Belastung durch das Ladegut und das dadurch bedingte ungewollte Verdrehen zu kompensieren ist mit Handschuhen an vielen Griffen nicht möglich.

Schon die unterschiedliche Beschaffenheit des Schnees - festgetreten, angefroren usw. - überfordert den üblichen Schneeschieber. Den notwendigen Druck nach vorne auf die Schaufelkante und dazu genügend Vorschubkraft aufzubringen, ist nur mit schräg nach vorne gebeugtem Oberkörper möglich und deshalb anstrengend und rückenschädigend.

Vielfach wird deshalb das Schaufelblatt in diesem Fall mit dem Fuß vorwärts getreten. Bei dieser asymmetrischen Belastung durch das Treten muss ein Verdrehen um die Stielachse verhindert werden, dies ist besonders schwierig am glatten oder vereisten Stielgriff. Genauso ist ein Verdrehen durch eine asymmetrische Belastung des Ladegutes schwer zu verhindern.

Außer der unterschiedlichen Beschaffenheit des Schnees ist auch die zu befreiende Oberfläche unterschiedlich beschaffen; auf glatten Asphaltflächen kann der festgetretene Schnee abgeschabt werden, während bei Schnee auf Kiesflächen das Werkzeugblatt über den Kies hinweggleiten muss, um nicht den Kies mit aufzunehmen.

Der Arbeitsablauf beim Schneeschaufeln setzt sich aus mehreren unterschiedlichen Arbeitsschritten zusammen. Zuerst wird der Schnee auf das Werkzeugblatt geschoben. Dann wird möglichst nah mit dem Körper an die schwere Last auf dem breiten Werkzeugblatt herangetreten, um aus dieser Position die Ladung anzuheben und zu beschleunigen. Mit den bisherigen breiten Werkzeugblättern kann nur mit vorgebeugtem Oberkörper nach vorne und in seitlicher Stellung zum Stielgriff gearbeitet werden; oder es wird mit ungünstig kurzem Arbeitshebel die Ladung vor dem vorderen Bein beschleunigt.

Auch mit den Winkelhebeln der Ausführungen, welche in der Patentschriften beschrieben sind, kann nur teilweise mit einer rückenschonenden Körperhaltung gearbeitet werden. Aber ein Verdrehen durch eine asymmetrische Belastung des Ladeguts ist hier nicht möglich.

Um mit einer rückenschonenden Körperbewegung arbeiten zu können, muss das angehobene Schaufelblatt in der schon vorher beschriebenen Ausgangsstellung nah vom Körper zur Seite weg die Wurfbewegung beschleunigen. Das angehobene Schaufelblatt vor dem Körper muss deshalb über dem vorderen Fuß schweben, und die hintere Kante bzw. Ecke darf nicht ans Schienbein schlagen. Die Breite des hinteren Schaufelblatts darf deshalb vom Ansatz 10 am Stielgriff bis zur Ecke nicht länger als der Abstand von der Schuhspitze bis zum Schienbein sein, wenn das Gerät rechts- und linkshändig bzw. rechts- und linksseitig ergonomisch günstig nah am Körper geführt werden soll.

Die erfindungsgemäße Griffhebelanordnung mit einem großen Schaufelblatt, ausgestaltet nach den oben gemachten Angaben, ermöglicht es, große schwere Lasten mit aufrechtem Oberkörper zu beschleunigen (Fig. 11, 12).

Die erfindungsgemäße Vorrichtung mit den abgestuften vorderen S-förmigen Griffbereichen und dem oberen vorderen Greifbereich über "Kniehöhe" ermöglicht auch beim Nachvornetreten der Schneeschieber/Schneeschaufel eine mittige Krafteinleitung mit dem Fuß. Der S-förmige Griff bietet große Gegenhebel gegen das Verdrehen in der Längs- und Höhenachse, sollte die Stoßbewegung einseitig gegen ein unerwartetes Hindernis stoßen.

Desweiteren gelten vielfach auch die vorher beschrieben Ausführungen zum erfindungsgemäßen Grabegerät.

Die erfindungsgemäße Griffhebelanordnung ist so gestaltet, dass Kräfte um die Drehachse sowohl Hand- als auch kräfteschonend bewältigt werden können. Die Last- und Krafthebel für die Führung bzw. Beherrschung der Drehbewegung sind so ausgewogen, dass z.B. Schnee nach dem Aufnehmen mit dem angehobenen Gerät mit einer Drehung "im Stand" vom Körper weggeschüttet werden kann; die angehobene Ladung wird dabei mit Hilfe des hinteren Winkelhebels 8 gekippt (Fig. 16), die vordere Hand führt die Drehachse. Noch günstiger werden die Hebelverhältnisse, wenn die vordere Hand an der untersten Höhe einer zweistufigen erfindungsgemäßen Ausführung als Drehachse fungiert.

Noch leichter auszuführen ist die Körperbewegung zum Entladen der erfindungsgemäßen Vorrichtung mit Schneeschaufelblatt nah am Körper mit Drehung des Gerät über die vordere Schulter; dazu wird der gestreckte Arm während des Anhebens im Ellbogen als Drehachse gedreht, und damit die Schaufel.

Die Abstufungen der vorderen S-förmigen Griffbereiche sind so in der Höhe bemessen, dass die Körperdrehachsen des Ellbogens und der Schulter ohne Behinderung durch den erfindungsgemäßen Griff eingesetzt werden können, siehe Fig. 16.

Der Ansatz 10 am Führungsstiel 3 ist meistens in der Mitte des Werkzeugteils mit dem Werkzeugteil verbunden, dies ermöglicht ein gleich gutes Arbeiten von beiden Seiten bzw. links- wie rechtshändiges Arbeiten. Um ein besonders großes Schneeschieberschaufelblatt einsetzen zu können und das Gerät noch ergonomisch günstig handhaben zu können, wird das Schaufelblatt asymmetrisch vom Körper weg verbreitert. Um aber ein Verdrehen durch eine zu große asymmetrische Belastung des Ladeguts zu vermeiden, wird ein zusätzlicher Hebel 11 im vorderen S-förmigen Griffbereich seitlich vom Körper weg angebracht.

Dieser mindesten handbreite Zusatzgriff 11 kann angeschweißt oder verstellbar mit dem S-förmigen Griff 3 der erfindungsgemäßen Vorrichtung nach Anspruch 1 verbunden werden. Vorteil dieser Ausgestaltung der Vorrichtung ist, dass eine Fläche wie z.B. ein Bürgersteig von ca. 2 m Breite in kürzester Zeit zur Seite freigeräumt werden kann (Fig. 17, 18).

Das Werkzeugteil 2 am erfindungsgemäßen Griff 3 kann auch von einem Besen zum Fegen der Fläche gebildet werden. Um die Fegebewegung zu erleichtern, ist der Griff zum Besenteil nicht senkrecht, sondern schräg zum Körper gerichtet angeordnet, um nicht noch ein asymmetrisches Besenteil zu benötigen.

Mit einem erfindungsgemäßen Grabegerät, mit Zinken als Werkzeugteil 2, werden Arbeitseinsätze möglich, die sonst nur mit verschiedene Geräten durchzuführen sind. Die neuartige Griffgestaltung mit drei Zinken ausgerüstet deckt die Arbeitsbereiche von bisherigen Geräten wie Handharke, Handhacke, Gabel und langstielige Drehgabel in der Handhabung. Bisherige Drehgabeln sind durch Ihre Griffanordnung mit der Gestaltung der Werkzeugzinken nicht für die Funktionen der Harke zum Zusammenziehen von Materialien, z.B. Laub, oder der Gabel zum Verteilen oder Aufnehmen von Materialien geeignet.

Bei bisherigen Hacken und Harken ist es erforderlich, den Körper nach vorne zu beugen. Zwar sollen gebogene und gestufte Griffe eine aufrechtere Körperhaltung beim Arbeiten ermöglichen. Da die Arbeitskraft aber zu weit weg, vor dem Körper eingeleitet bzw. geführt wird, sind dann die Arbeitshebel zu kurz. Es entstehen die oben schon geschilderten Nachteile.

Wird die erfindungsgemäße Vorrichtung für den Arbeitsschwerpunkt Hack- und Harkbewegung ausgelegt, ändert sich die Grundform des Führungsgriffs 3 nicht. Die Greif- und Bewegungsbereiche werden den Arbeitsfunktionen des Geräts angepasst. Die Lage des Griffs ist senkrecht, wie beim Spaten, aber um 180° gedreht. Der vorher "hintere Griffbereich" wird dann in der Ausgangsposition der Arbeitsbewegung mit angewinkeltem Ellenbogen vorne oben in fast senkrechter Lage über dem Werkzeugteil 2 geführt. Mit dem hinteren Arm wird der vorher "vordere gebogene Griffbereich" zurückgezogen (Fig. 19, 20).

Mit einem neuartigen "Harken-/Schaufelblatt" kann nach dem Zusammenziehen das gesammelte Laub oder Gras durch Umklappen des erfindungsgemäßen Griffs und Umgreifen der Hände das Material wie mit einer Schaufel in eine Schubkarre befördert werden. Das Umklappen bzw. Umgreifen wird dabei in der Ebene der hauptsächlichen Kraftrichtungen ausgeführt, wenn die Ladung zur Seite weiter befördert wird.

Das aufgenommene Ladegut kann dann wie mit einer Gabel in jede Richtung weiter befördert werden (Fig. 21, 22).

Mit bisherigen Arbeitsgeräten können diese beiden Arbeiten nicht mit einem Gerät durchgeführt werden.

Vorteilhaft ist die erfindungsgemäße Vorrichtung, der S-förmige Griff 3 mit einem besonders großen "Schaufel-/Ladebehälter" als Werkzeugteil 2 verbunden, für leichte großvolumige Ladegüter geeignet. In den Schaufel-/Ladebehälter sind nahe am Schwerpunkt Rollen unten im hinteren seitlichen Randbereich integriert. Ebenso ist der vordere S-förmige Griffbereich 5 in den oberen hinteren Rand des Behälters integriert. Dazu ist der untere Griffbereich beidseitig geteilt und am Rand befestigt, um so nah am Schwerpunkt der Last zu sein. Die erfindungsgemäße Vorrichtung kann für längere Strecken wie eine Lastkarre gerollt oder auch über Gleitelemente waagerecht bewegt werden. Die Ladung kann aber auch wie mit einer Schaufel angehoben und so befördert werden. Um die große Last vorne besser anheben zu können, ist der vordere Griffbereich 4 a als abgewinkelter Zwischenabschnitt ausgeführt und fast waagerecht über dem Werkzeugteil 2 angeordnet (Fig.23, 24).

Vorteilhaft ist die erfindungsgemäße Vorrichtung auch für Arbeiten mit handgeführten Arbeitsmaschinen. Bei herkömmlichen Handgeräten (z.B. Heckenschere) wird mit beiden Armen nebeneinander die Arbeitskraft weit weg vor dem Körper eingeleitet bzw. geführt; die Arbeitshebel sind kurz. Einige der Nachteile sind oben schon geschildert. Haltearbeit mit beiden vorgestreckten Armen ist in jeder Arbeitshöhe ab Hüfthöhe anstrengend, der Schwerpunkt liegt immer vor dem Körper. Die Haltearbeit vom Körper weg ist für den R□cken-, Arm- und Handapparat anstrengend, sogar schädlich. Nicht nur wegen der längeren Krafthebel ist ein maschinenangetriebenes Arbeitsgerät als Werkzeug 2 mit dem erfindungsgemäáen S-förmigen Griff 3 ausgerüstet leichter zu führen; durch die längeren Krafthebel wird der Schwerpunkt an den Körper verlagert und ermöglicht eine ergonomisch günstige Armhaltung.

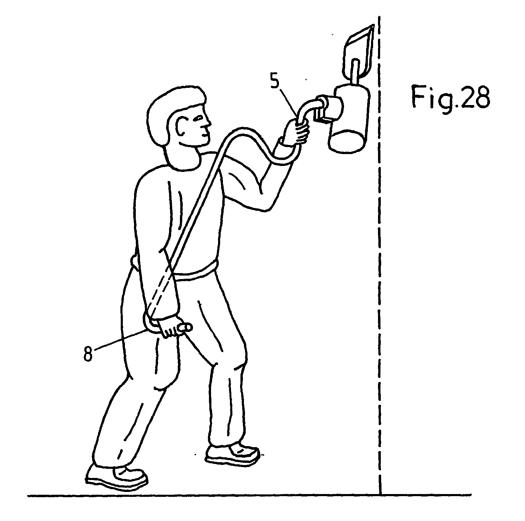

Mit einem bisher von Hand geführten maschinenangetriebenen Arbeitsgerät wie z.B. einem Presslufthammer als Werkzeug 2 mit dem erfindungsgemäßen S-förmigen Griff 3 ausgerüstet können im Stehen Estrichbeläge am Boden oder Putz an den Wänden ergonomisch günstig entfernt werden (Fig. 28).

Die Multifunktionalität wird vergrößert, wenn bisher von Hand geführte maschinenangetriebene Arbeitsgeräte wie z.B. Heckenscheren als Werkzeug 2 mit dem erfindungsgemäßen S-förmigen Griff 3 ausgerüstet werden. Sie können vielfältiger eingesetzt werden - nicht nur zum Heckenschneiden. Mit dem gleichen Gerät können wie mit einer Sense auf der Bodenebene z.B. ohne Bücken vertrocknete Stauden abgeschnitten werden. Die gesamte Handhabung wird erleichtert; so können höhere Hecken ohne Leiter geschnitten werden.

Zum Heckenschneiden wird mit dem Gerät meistens zur Seite in einem Bogen gearbeitet, während bei den bisher beschriebenen erfindungsgemäßen Arbeitsgeräten die Bewegung hauptsächlich in Richtung der Griffebene stattfand. Um bei der erfindungsgemäßen Vorrichtung die seitliche, hauptsächlich senkrechte Auf-und-Ab-Bewegung günstig im Schwerpunkt nah am Werkzeugteil zu führen, ist die unteren Griffstufe des S-förmigen Griffs 3 geteilt, um beidseitig Griffbereiche auszubilden. Die beidseitigen Griffbereiche können wie in (Fig. 25 a, b) dargestellt als Teil des Griffs beweglich bzw. verstellbar mit dem maschinenangetriebenen Arbeitsgerät als Werkzeug 2 verbunden sein. Oder der untere Griffbereich des S-förmigen Griffs 3 kann auch durch einzelne Griffteile, die am Gehäuse des maschinenangetriebenes Arbeitsgeräts befestigt sind, gebildet werden. Der untere S-förmige Griffbereich kann sogar aus dem Gehäuse ausgeformt werden, um einen optimalen und kostengünstigen Führungsgriff mit Schalterfunktion zu ermöglichen.

Ein weiterer Vorteil der erfindungsgemäßen Griffhebelanordnung an maschinenangetriebenen Arbeitsgeräten ist, dass die Zuführung der Stromversorgung am Stielende sich hinten, weit weg von den Schneidarbeiten befindet und so ein unbeabsichtigtes Durchtrennen des Stromkabels vermieden wird.

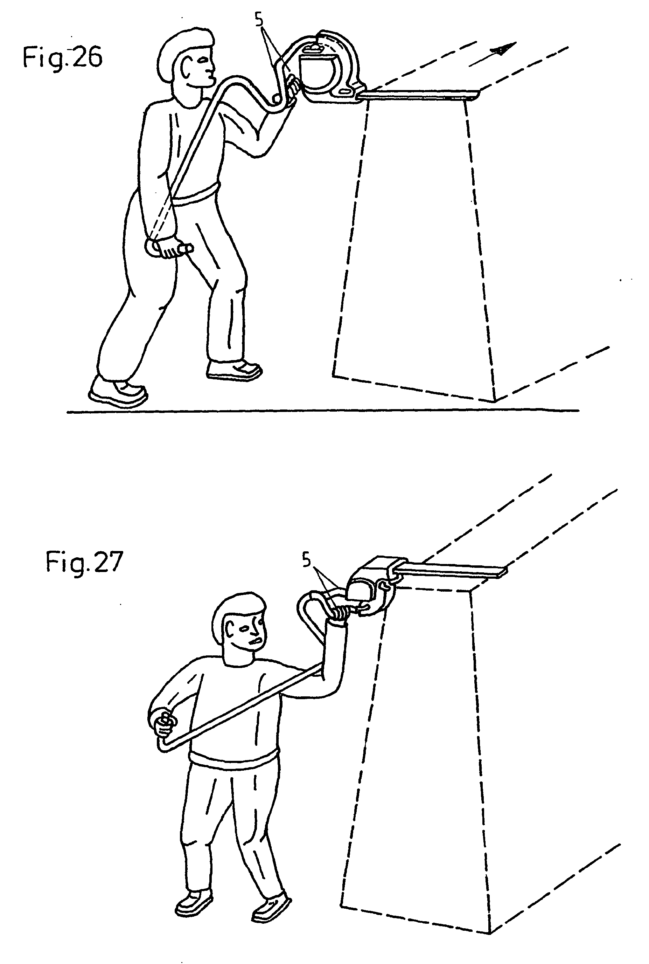

Durch Verstellung des maschinenangetriebenen Arbeitsgerätes im rechten Winkel kann auch das Gewicht des Arbeitsgerätes ergonomisch günstig mit nach unten gestrecktem Arm am hinteren Griffende 7 getragen werden, wenn die Hecke oben waagrecht in 1,50 - 1,80 m Höhe ohne Leiter geschnitten wird (Fig. 26). Über diese Höhe kann ein 1,80 m großer Mann, mit nach oben gedrehtem maschinenangetriebenen Werkzeug den Griff vorne auf der Schulter abgestützt und hinten an dem dann noch oben gerichtetem Griffende 8 geführt, die Hecke bis 2,30 m Höhe ohne Leiter schneiden. Um die Führung der hauptsächlich zur Seite geführten Bewegung der erfindungsgemäßen Heckenschere zu erleichtern, wird das hintere Griffende 8 im Winkel von ca. 10° aus der Griffebene der hauptsächlichen Kraftrichtungen angeordnet. Die Anordnung linksseitig wie in Fig. 25 dargestellt, wird, da die Mehrheit der Menschheit rechtshändig veranlagt ist, selten benötigt. Hauptsächlich wird das Griffende 8 vom Körper weg nach rechts angeordnet sein.

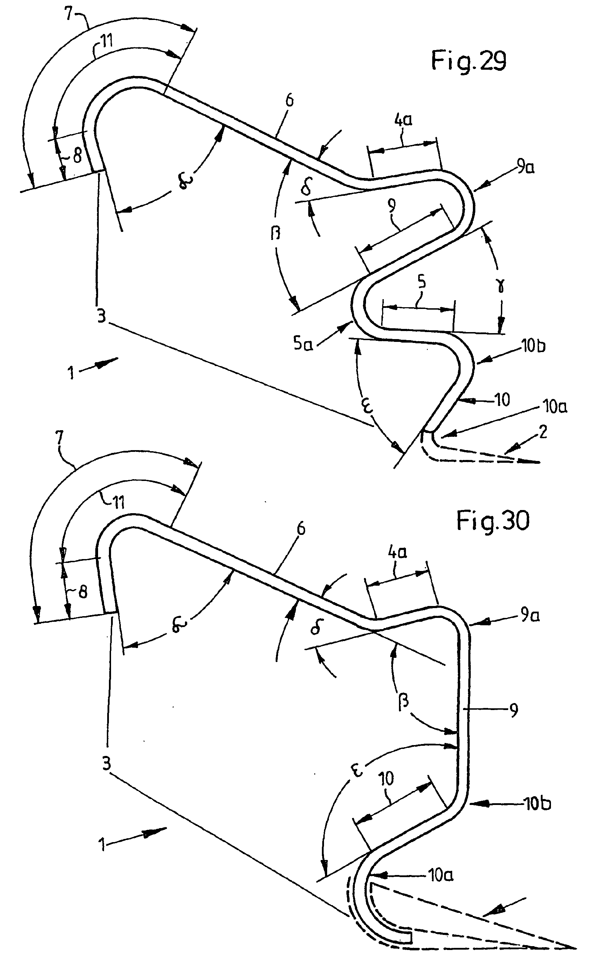

Fig. 29 zeigt eine Ausgestaltung der Erfindung gemäß Anspruch 8, wobei ein unter einem Winkel δ von etwa 45° gegenüber dem geraden Mittelabschnitt 6 abgewinkelter Zwischenabschnitt 4a angeordnet ist. Unter Beibehaltung eines Winkels β (zwischen erstem geraden Griffbereich 9 und geradem Mittelabschnitt 6) von etwa 55° entsprechend der Ausführungsform nach Fig. 1 erstreckt sich dann der erste gebogene Abschnitt 9a über einen größeren Winkelbereich.

Fig. 30 zeigt eine alternative Ausführungsform, die nicht der Erfindung entspricht, bei der der erste gerade Griffbereich 9 nicht in Richtung auf den Mittelabschnitt 6, sondern von diesem wegweisend abgewinkelt ist, und zwar unter einem Winkel β von etwa 115°. Ein Trittabschnitt 10 ist anschließend an einen Übergangsabschnitt 10 unter einem Winkel ε von etwa 120° gegenüber dem Griffbereich 9 in Richtung auf den geraden Mittelabschnitt 6 abgewinkelt. An den Trittbereich 10 schließt sich der Befestigungs-Endabschnitt 10a an, der sich bogenförmig von dem Mittelabschnitt 6 weg erstrecken kann, wie Fig. 30 zeigt.

### Bezugszeichenliste

- 2: Werkzeugteil
- 3: Arbeitsstiel
- 4: Stielgriffbereich
- 4a: abgewinkelter Zwischenabschnitt
- 5: vorderer unterer Griffbereich
- 6: gerader Arbeitsstielabschnitt
- 7: Schlußteil
- 8: gerades Griffende
- 9: erster gerader Griffbereich
- 9a: erster gebogener Abschnitt
- 10: Trittabschnitt
- 10a: Befestigungs-Endabschnitt
- 10b: Übergangsabschnitt
- 11: Bogenabschnitt
- 12: Rollen
- 13: Seitengriff
- 14: Transportvorrichtung
- 15: Eingriff

## Patentansprüche

1. Stiel für ein Arbeitsgerät (2) mit
- einem bogenförmigen Griff-Endabschnitt (11),
- einem geraden Mittelabschnitt (6, 4) (Figur 1)
- und einem Befestigungs-Endabschnitt (10a) zum Anbringen des Arbeitsgeräts (2), wobei
- zwischen dem geraden Mittelabschnitt (6, 4) und dem Befestigungs-Endabschnitt (10a) ein S-bogenförmiger Griffabschnitt angeordnet ist,
- der einen ersten geraden Griffbereich (9) aufweist, der mit dem Mittelabschnitt (6, 4) über einen ersten gebogenen Abschnitt (9a) verbunden ist und gegenüber dem Mittelabschnitt (6, 4) um etwa 30° bis etwa 90°, insbesondere etwa 55°, abgebogen ist (β), und
- einen zweiten geraden Griffbereich (5), der mit dem ersten geraden Griffbereich (9) über einen zweiten gebogenen Abschnitt (5a) verbunden ist und gegenüber dem ersten geraden Griffbereich (9) um etwa 30° bis etwa 60°, insbesondere etwa 45°, abgewinkelt ist (γ),
- wobei der Befestigungs-Endabschnitt (10a) mit dem zweiten Griffbereich (5) verbunden ist, **dadurch gekennzeichnet,**
- **dass** die Länge des Griff-Endabschnitts (11) und der Griffbereiche (5, 9) mindestens etwa einer Handbreite entspricht.

2. Stiel nach Anspruch 1, **dadurch gekennzeichnet, dass** zwischen dem zweiten geraden Griffbereich (5) und dem Befestigungs-Endabschnitt (10a) ein gebogener Übergangsabschnitt (10b) angeordnet ist, dessen Biegungsrichtung mit der des ersten gebogenen Abschnitts (9a) übereinstimmt.

3. Stiel nach Anspruch 2, **dadurch gekennzeichnet, dass** zwischen dem gebogenen Übergangsabschnitt (10b) und dem Befestigungs-Endabschnitt (10a) ein gerader Trittabschnitt (10) angeordnet ist.

4. Stiel nach einem der vorangehenden Ansprüche, **dadurch gekennzeichnet, dass** der Griff-Endabschnitt (11) in ein gerades Griffende (8) übergeht.

5. Stiel nach einem der vorangehenden Ansprüche, **dadurch gekennzeichnet, dass** der Griff-Endabschnitt (11) bzw. das Griffende (8) gegenüber dem Mittelabschnitt (6) um etwa 30° bis etwa 90°, insbesondere etwa 55°, abgebogen ist (α).

6. Stiel nach einem der vorangehenden Ansprüche, **dadurch gekennzeichnet, dass** der Übergangsabschnitt (10b) bzw. der Trittabschnitt (10) gegenüber dem zweiten geraden Griffbereich (5) um etwa 40° bis etwa 90°, insbesondere etwa 70°, abgewinkelt ist (ε).

7. Stiel nach einem der vorangehenden Ansprüche, **dadurch gekennzeichnet, dass** der bogenförmige Griff-Endabschnitt (11), der erste und zweite gebogene Abschnitt (5a, 9a) und der Übergangsabschnitt (10b) kreisbogenförmig gekrümmt sind.

8. Stiel nach einem der vorangehenden Ansprüche, **dadurch gekennzeichnet, dass** sich zwischen dem ersten gebogenen Abschnitt (9a) und dem geraden Mittelabschnitt (6) ein abgewinkelter Zwischenabschnitt (4a, Fig. 23, 24, 29) befindet.

9. Stiel nach einem der vorangehenden Ansprüche, **dadurch gekennzeichnet, dass** an mindestens einem Griffbereich (4, 4a, 5, 6, 9), gebogenen Abschnitt (5a, 10b, 9a) und/oder dem Griff-Endabschnitt (11) und/oder dem Trittabschnitt (10) ein Griff (11, Fig. 17, 18) angebracht ist.

10. Stiel nach Anspruch 9, **dadurch gekennzeichnet, dass** der Griff (11) lage- und/oder richtungsverstellbar ist.

11. Stiel nach einem der vorangehenden Ansprüche, **dadurch gekennzeichnet, dass** sich der Stiel im Wesentlichen in einer Ebene erstreckt.

12. Stiel nach einem der Ansprüche 1 bis 11, **dadurch gekennzeichnet, dass** mindestens ein Griffbereich (5, 9), der Griff-Endabschnitt (11), das Griffende (8) und/oder der Trittabschnitt (10) räumlich abgewinkelt ist.

13. Arbeitsgerät (1) mit einer Arbeitsvorrichtung (2) und einem Stiel (3) nach einem der vorangehenden Ansprüche.

14. Arbeitsgerät (1) nach Anspruch 13, **dadurch gekennzeichnet, dass** der Stiel (3) außermittig an einem Arbeitsgerät (2) befestigt ist (Fig. 17, 18).

## Claims

1. Handle for a tool (2) with
- an bow-shaped handle-end portion (11),
- a straight middle portion (6, 4) (Figure 1)
- and an attachment-end portion (10a) for attaching the tool (2), and
- an S-shaped gripping portion is disposed between the straight middle portion (6, 4) and the attachment-end portion (10a),
- which has a first straight gripping region (9) which is joined to the middle portion (6, 4) by means of a first bent portion (9a) and is bent (β) by approximately 30° to approximately 90°, in particular approximately 55° with respect to the middle portion (6, 4), and
- a second straight gripping region (5) joined to the first straight gripping region (9) via a second bent portion (5a) and is bent at an angle (γ) of approximately 30° to approximately 60°, in particular approximately 45°, with respect to the first straight gripping region (9),
- and the attachment-end portion (10a) is joined to the second gripping region (5), **characterised in that**
- the length of the handle-end portion (11) and the gripping regions (5, 9) is at least approximately the width of a hand.

2. Handle as claimed in claim 1, **characterised in that** a bent transition portion (10b) is disposed between the second straight gripping region (5) and the attachment-end portion (10a), the bend direction of which is the same as that of the first bent portion (9a).

3. Handle as claimed in claim 2, **characterised in that** a straight tread portion (10) is disposed between the bent transition portion (10b) and the attachment-end portion (10a).

4. Handle as claimed in one of the preceding claims, **characterised in that** the handle-end portion (11) merges into a straight handle end (8).

5. Handle as claimed in one of the preceding claims, **characterised in that** the handle-end portion (11) or handle end (8) is bent (α) by approximately 30° to approximately 90°, in particular approximately 55°, with respect to the middle portion (6).

6. Handle as claimed in one of the preceding claims, **characterised in that** the transition portion (10b) or tread portion (10) is bent at an angle (ε) of approximately 40° to approximately 90°, in particular approximately 70°, with respect to the second straight gripping region (5).

7. Handle as claimed in one of the preceding claims, **characterised in that** the bow-shaped handle-end portion (11), the first and second bent portion (5a, 9a) and the transition portion (10b) are arcuately curved.

8. Handle as claimed in one of the preceding claims, **characterised in that** an angled intermediate portion (4a, Figs. 23, 24, 29) is disposed between the first bent portion (9a) and the straight middle portion (6).

9. Handle as claimed in one of the preceding claims, **characterised in that** a handle (11, Figs. 17, 18) is attached to at least one gripping region (4, 4a, 5, 6, 9), bow-shaped portion (5a, 10b, 9a) and/or the handle-end portion (11) and/or the tread portion (10).

10. Handle as claimed in claim 9, **characterised in that** the position and/or direction of the handle (11) can be adjusted.

11. Handle as claimed in one of the preceding claims, **characterised in that** the handle essentially extends in one plane.

12. Handle as claimed in one of claims 1 to 11, **characterised in that** at least one gripping region (5, 9), the handle-end portion (11), the handle end (8) and/or the tread portion (10) are three-dimensionally angled.

13. Tool (1) with an tool device (2) and a handle (3) as claimed in one of the preceding claims.

14. Tool (1) as claimed in claim 13, **characterised in that** the handle (3) is attached to the tool (2) eccentrically (Fig. 17, 18).

## Revendications

1. Manche pour un outil de travail (2) avec
- une section arquée d'extrémité formant poignée (11),
- une section médiane centrale droite (6, 4) (figure 1),
- et une section d'extrémité de fixation (10a) pour l'application de l'outil de travail (2),
- une section de poignée en forme de S arquée étant disposée entre la section moyenne droite (6, 4) et la section d'extrémité de fixation (10a),
- qui présente une première zone droite de poignée (9) qui est reliée à la section médiane (6, 4) par une première section arquée (9a) et est incurvée (β) par rapport à la section médiane (6, 4) d'environ 30° à 90°, en particulier d'environ 55 ° et
- une seconde zone droite de poignée (5) qui est reliée à la première zone droite de poignée (9) par une seconde section arquée (5a) et est incurvée (γ) par rapport à la première zone droite de poignée (9) d'environ 30 à 60°, en particulier d'environ 45°,
- la section d'extrémité de fixation (10a) étant reliée à la seconde zone de poignée (5), **caractérisé en ce que**
- la longueur de la section d'extrémité de poignée (11) et les zones de poignées (5, 9) correspondent au moins à la largeur d'une main.

2. Manche selon la revendication 1, **caractérisé en ce qu'**entre la seconde zone de poignée droite (5) et la section d'extrémité de fixation (10a), il est disposé une section de transition arquée (10b) dont la direction de flexion correspond à celle de la première section arquée (9a).

3. Manche selon la revendication 2, **caractérisée en ce qu'**entre la section de transition arquée (10b) et la section d'extrémité de fixation (10a), il est disposé une section droite de palier (10).

4. Manche selon l'une des revendications précédentes, **caractérisée en ce que** la section d'extrémité de poignée (11) se poursuit par une extrémité de poignée droite (8).

5. Manche selon l'une des revendications précédentes, **caractérisé en ce que** la section d'extrémité de poignée (11), respectivement l'extrémité de poignée (8) est arquée (α) par rapport à la section médiane (6).

6. Manche selon l'une des revendications précédentes, **caractérisé en ce que** la section de transition (10b) respectivement de la section de palier (10) est coudée (ε) d'environ 40° à environ 90°, en particulier de 70° par rapport à la seconde zone droite de poignée (5).

7. Manche selon l'une des revendications précédentes, **caractérisé en ce que** la section arquée d'extrémité de poignée (11), la première et seconde section cintrée (5a, 9a) et la section de transition (10b) sont incurvées en arc de cercle.

8. Manche selon l'une des revendications précédentes, **caractérisé en ce qu'**entre la première section cintrée (9a) et la section médiane droite (6), il se trouve une section intermédiaire coudée (4a, figures 23, 24, 29).

9. Manche selon l'une des revendications précédentes, **caractérisé en ce que** sur au moins une section de poignée (4, 4a, 5, 6, 9), à une section cintrée (5a, 10b, 9a) et/ou à la section d'extrémité de poignée (11) et/ou à la section de marche (10), il est placé une poignée (11, figure 17, 18).

10. Manche selon la revendication 9, **caractérisé en ce que** la poignée (11) est réglable en position et/ou en direction.

11. Manche selon l'une des revendications précédentes, **caractérisé en ce que** le manche s'étend sensiblement dans un plan.

12. Manche selon l'une des revendications 1 à 11, **caractérisé en ce qu'**au moins une zone de poignée (5, 9), la section d'extrémité de poignée (11), l'extrémité de poignée (8) et/ou la section de marche (10) est coudée spatialement.

13. Appareil de travail (1) avec un dispositif de travail (2) et un manche (3) selon l'une des revendications précédentes.

14. Appareil de travail (1) selon la revendication 13, **caractérisé en ce que** le manche est fixé excentré sur un appareil de travail (2) (figure 17, 18).
